# EUROPÄISCHE PATENTSCHRIFT

(11) **EP 2 425 285 B1**
(45) Veröffentlichungstag und Bekanntmachung des Hinweises auf die Patenterteilung: **10.02.2016**
(21) Anmeldenummer: 10718526.6
(22) Anmeldetag: 19.04.2010
(51) Int. Cl.: G02B 6/00

(54) **SCHEIBENANORDNUNG MIT BELEUCHTUNG DURCH LED-LICHTLEISTE UND HERSTELLUNGSVERFAHREN**
PANE ASSEMBLY ILLUMINATED THROUGH A LINEAR LED-ARRAY AND METHODS OF MANUFACTURING
DISPOSITIF DE VITRE ILLUMINÉE PAR BANDE LUMINEUSE À LED ET PROCÉDÉS DE FABRICATION

(30) Priorität: 30.04.2009 DE 102009019623
(43) Veröffentlichungstag der Anmeldung: 07.03.2012
(73) Patentinhaber: Saint-Gobain Glass France, 92400 Courbevoie (FR)
(72) Erfinder: MÜLLER, Marco, 52525 Waldfeucht (DE); MESSERE, Rino, B-4577 Modave (BE); HAASE, Henning, 88138 Weißensberg (DE)
(74) Vertreter: Lendvai, Tomas
(86) Internationale Anmeldenummer: PCT/EP2010/055097
(87) Internationale Veröffentlichungsnummer: WO 2010/124951

(56) Entgegenhaltungen:
- EP-A2- 0 818 652
- WO-A1-98/10219
- WO-A2-2008/007297
- US-A1- 2007 133 222
- US-A1- 2008 049 168

## Beschreibung

Die Erfindung betrifft eine Scheibenanordnung mit Beleuchtung, ein Verfahren zu ihrer Herstellung und ihre Verwendung.

Beleuchte Scheibenanordnungen beinhalten Scheiben und am Rand der Scheibe direkt angebrachte Leuchtmittel. Auf der Scheibenoberfläche aufgebrachte Reflexionselemente ermöglichen die Beleuchtung der Scheibenfläche. So lassen sich Innenräume aber auch Gebäudeaußenfassaden sehr gleichmäßig beleuchten. Beleuchtete Scheibenanordnungen finden sich in einer Vielzahl von Anwendungsbereichen innerhalb und außerhalb von Gebäuden und Fahrzeugen.

Im Gegensatz zu einer punktförmigen Lichtquelle wie einer Stehlampe oder Deckenlampe, lässt sich durch eine beleuchtete Scheibenanordnung ein sehr gleichmäßiges, flächiges Licht erzeugen. In Abhängigkeit von der verwendeten Leuchtquelle und der Ansteuerelektronik lassen sich auch verschiedene Lichteffekte realisieren. Insbesondere bei der Verwendung von farbigen LEDs lassen sich verschiedene Farbeffekte kombinieren. So lassen sich bewegende Lichteffekte durch die gezielte Ansteuerung und Löschung einzelner LEDs erzeugen. Für den Betrachter scheint sich dabei das Licht in Farbwellen auszubreiten. Überlagern sich dabei mehrere Farbwellen, so ergeben sich weitere Effekte wie eine Farbmarmorienung (Moiré-Effekt). Diese Licht- und Farbeffekte lassen sich auch für Werbeflächen oder zur Erzeugung künstlerischer und architektonischer Effekte nutzen.

Die Befestigung der Leuchtmittel wie LEDs erfolgt in der Regel in starren LED-Lichtleisten. Die hintereinander befestigten LEDs werden auf der LED-Leiterplatte in einem festen Kunststoff- oder Metallgehäuse an der Scheibe befestigt. Aufgrund der unterschiedlichen Materialeigenschaften der so erhaltenen LED-Lichtleiste und der Scheibe ist eine Befestigung oft schwierig realisierbar. Weichen zudem die Geometrien der Scheibe und der LED-Lichtleiste nur geringfügig voneinander ab, so wird die dauerhafte Befestigung zusätzlich erschwert. Toleranzen in der Befestigung, insbesondere an den elektrischen Anschlüssen und am Kabel, erzeugen zudem in vielen Fällen Undichtigkeiten durch die Feuchtigkeit eindringen kann. Diese Feuchtigkeit verursacht in vielen Fällen Kurzschlüsse und macht zeit- und kostenintensive Reparaturen notwendig.

DE 295 10 238 U1 offenbart ein Fenster mit im Randbereich angebrachten Lichteinstrahlmitteln oder Lichtleitern. Auf dem Fenster angebrachte Reflektoren (Lichtablenkmittel) ermöglichen ein Abstrahlen des ins Fenster eingekoppelten Lichts. Als mögliche Lichtquellen kommen Glühlampen, Leuchtstoffröhren oder LEDs in Frage.

DE 198 52 593 A1 offenbart eine Flächenleuchte mit einer transparenten Verglasung. Bei ausgeschalteter Lichtquelle ist die Scheibe transparent. Wird die Lichtquelle eingeschaltet, so funktioniert die Verglasung als Flächenleuchte.

DE 102 24 421 A1 offenbart eine Lichtwand mit Lampen die hinter einem Computerarbeitsplatz angeordnet ist. Die Lichtwand besteht aus einer transparenten Glas- oder Kunststoffscheibe, die bevorzugt über LEDs beleuchtet wird. Die Helligkeit und die Farbanteile können über eine Steuerungseinheit geregelt werden. Die Steuerungseinheit kann direkt mit dem PC des Computerarbeitsplatzes verbunden werden und die Helligkeit des Arbeitsplatzes in Abhängigkeit von der Helligkeit des Monitors regeln.

DE 20 2006 006 051 U1 offenbart eine Fahrzeug-Heckscheibe. Am Rand der Glasscheibe sind Leuchtquellen angeordnet, die ein Aufleuchten eines auf der Scheibe angebrachten Symbols ermöglichen.

EP 1 346 178 B1 offenbart ein sandwichartiges Plattenelement. Die beiden Platten sind weitgehend lichtdurchlässig. Im Plattenzwischenraum oder an den Platten sind Solarzellenelemente angebracht. Eine Lichtquelle ist stirnseitig an mindestens einer Platte angeordnet und ermöglicht eine zusätzliche Beleuchtung.

Weitere Beleuchtungseinheiten mit LEDs finden sich auch in der US 2007/133222 A1, DE 10 2004 035 756 A1, EP 1 998 103 A1, US 2008/0316741 A1 und JP 2007-036044 A.

Die Aufgabe der Erfindung liegt darin, eine beleuchtete Scheibenanordnung bereitzustellen, die eine dichte, feuchtigkeitsundurchlässige und gleichzeitig flexible Befestigung der LED-Lichtleiste an der Scheibe erlaubt.

Die Aufgabe der vorliegenden Erfindung wird erfindungsgemäß durch eine Scheibenanordnung mit Beleuchtung, ein Verfahren zu deren Herstellung und deren Verwendung nach den unabhängigen Ansprüchen 1, 8 und 11 gelöst. Bevorzugte Ausführungen gehen aus den Unteransprüchen hervor.

Die beleuchtete Scheibenanordnung umfasst mindestens eine Scheibe, ein Verbindungsstück und eine über das Verbindungsstück am Rand der Scheibe befestigte LED-Lichtleiste. Die Scheibe enthält Materialien wie Glas und/oder transparente Polymere. Die Scheibe weist bevorzugt eine optische Transparenz von > 85 % auf. Grundsätzlich sind verschiedene Geometrien der Scheibe möglich, beispielsweise rechteckige, trapezförmige und abgerundete Geometrien.

Das Verbindungsstück verbindet und befestigt die LED-Lichtleiste mit der Scheibe. Das Verbindungsstück weist bevorzugt eine vergleichbare optische Transparenz wie die Scheibe auf. Das Verbindungsstück enthält bevorzugt einen dünnen, adhäsiven, und/oder klebenden Polymerfilm. Die Dicke des Verbindungsstückes ist bevorzugt kleiner als 5 mm, besonders bevorzugt kleiner als 1 mm. Das Verbindungsstück hat bevorzugt eine ähnliche und/oder gleiche Zusammensetzung wie die unten beschriebene Polymerummantelung der LED-Leiste.

Die LED-Lichtleiste umfasst mindestens eine LED-Leiterplatte, eine LED, ein elektrisches Anschlusskabel und eine Polymerummantelung. Die LED-Leiterplatte umfasst handelsübliche Leiterplatten und/oder Platinen. Diese bestehen aus elektrisch isolierenden Materialien auf denen elektrische Verbindungen angebracht sind. Beispiele für isolierende Materialien sind nicht leitfähige Polymere wie mit Epoxydharz getränkte Glasfaser, Teflon, Keramik und/oder Polyesterfolie. Die elektrischen Verbindungen (beispielsweise Leitungsdrähte) enthalten bevorzugt Kupfer, Eisen, Zinn, Nickel, Gold und/oder Silber. Auf den LED-Leiterplatten werden die LEDs befestigt und über die elektrischen Verbindungen kontaktiert. Das elektrische Anschlusskabel stellt die Verbindung zur Stromquelle her. Bevorzugt ist zwischen dem elektrischen Anschlusskabel und der Stromquelle noch eine Steuervorrichtung angeordnet. Diese Steuervorrichtung ermöglicht die gezielte Beleuchtung einzelner LEDs. Durch die Anordnung verschiedenfarbiger LEDs auf der LED-Leiterplatte lassen sich farbige Lichteffekte erzeugen. Die gesamte Anordnung der Komponenten der LED-Lichtleiste aus LED-Leiterplatte, LEDs und elektrischen Anschlusskabel befindet sich in einer Polymerummantelung. Die bevorzugt vollständig geschlossene Polymerummantelung versiegelt die Komponenten und verhindert das Eindringen von Feuchtigkeit und Verunreinigungen. In Abhängigkeit von der chemischen Zusammensetzung und der Dicke der Polymerummantelung ist die LED-Lichtleiste flexibel und kann auch an abgerundeten Scheiben befestigt werden. Auf der Austrittsseite des Lichts der LEDs weist die Polymerummantelung bevorzugt eine hochglänzende Oberfläche auf.

Ein auf der Scheibe angebrachter Reflektor reflektiert das von der LED-Lichtleiste in die Scheibe eingekoppelte Licht nach außen. Sind nur einzelne Reflektoren auf der Scheibe angebracht, so leuchtet die Scheibe nur im Bereich der Reflektoren. Ist die gesamte Scheibenoberfläche mit Reflektoren versehen, so leuchtet entsprechend die gesamte Scheibe.

Das Verbindungsstück enthält erfindungsgemäß ein doppelseitiges, optisch transparentes Klebeband. Die Wahl des Klebstoffes auf dem Klebeband richtet sich dabei nach dem Material der Scheibe bzw. der Polymerummantelung.

Das optisch transparente Klebeband enthält auf der der Polymerummantelung zugewandten Seite einen Klebstoff auf Silikonbasis und auf der der Scheibe zugewandten Seite einen Klebstoff auf Acrylatbasis. So lässt sich beispielsweise eine Polymerummantelung aus Silikon mit einer Scheibe aus Glas oder Polyacryl fest verbinden.

Das optisch transparente Klebeband wird bevorzugt durch eine Koronaentladung aktiviert. An der Oberfläche des Klebebandes entstehen polare Moleküle oder Molekülbruchstücke die eine verbesserte Haftung auf dem Klebeband ermöglichen. Neben polaren Molekülen können auch radikalische Molelkülfragmente oder Ionen auf der Oberfläche des aktivierten Klebebandes entstehen.

Die Scheibe enthält bevorzugt einen der Werkstoffe Glas und/oder Polymer, besonders bevorzugt Flachglas und/oder Polymethylmethacrylat.

Die Scheibe weist bevorzugt eine Fläche von > 0,2 m², besonders bevorzugt von > 1 m² und insbesondere bevorzugt von > 5 m² auf.

Die Polymerummantelung enthält bevorzugt Silikone, Polyisoprene, Styrol-Butadien-Kautschuk, Butadien-Acrylnitril-Kautschuk und/oder Polyacrylate sowie Gemische und/oder Copolymere davon.

Die Silikone enthalten bevorzugt RTV(raumtemperaturvernetzenden)-Silikonkautschuk, HTV(hochtemperaturvernetzenden)-Silikonkautschuk, peroxidischvernetzenden-Silikonkautschuk, 2 Komponenten LSR(Liquid Silicone Rubber)-Silikonkautschuk und/oder additionsvernetzenden-Silikonkautschuk sowie Gemische und/oder Copolymere davon.

Die Polymerummantelung weist bevorzugt eine optische Transparenz von > 60 %, bevorzugt von > 75 % und besonders bevorzugt von > 85 % auf.

Die Polymerummantelung umfasst bevorzugt einen extrudierten Silikonformkörper. Der extrudierte Silikonformkörper besteht bevorzugt aus einem hochtransparenten peroxidischvemetzter-Silikonkautschuk und/oder additionsvernetzter-Silikonkautschuk. Die optische Transparenz beträgt bevorzugt > 75 % und besonders bevorzugt > 85 %. Der extrudierte Silikonformköiper kann separat vorgefertigt werden. Die LEDs, LED-Leiterplatten und das elektrische Anschlusskabel können später in den extrudierten Silikonfomkörper eingesetzt werden und der extrudierte Silikonformkörper versiegelt werden.

Die Polymerummantelung enthält bevorzugt UV-Stabilisatoren und Konservierungsstoffe. Beispiele für UV-Stabilisatoren sind Hydroxybenzophenon und Dialkyldithiocarbamate.

Das Verbindungsstück enthält bevorzugt Acrylatklebstoffe, Methylmethacrylatklebstoffe, Cyanacrylatklebstoffe, Polyepoxide, Silikonklebstoffe und/oder Silanvernetzende-Polymerklebstoffe sowie Gemische und/oder Copolymere davon.

Das Verbindungsstück weist bevorzugt eine optische Transparenz von > 80 % und besonders bevorzugt von > 90 % auf.

Die LEDs umfassen bevorzugt sowohl LEDs (Light Emitting Diode) als auch OLEDs (Organic Light Emitting Diode).

Die LEDs weisen bevorzugt einen Abstand zu der Scheibe von < 1 mm, besonders bevorzugt < 0,5 mm auf.

Der Reflektor umfasst bevorzugt Strukturen zur Lichtstreuung, besonders bevorzugt Partikel, Punktraster, Aufkleber, Anlagerungen, Einkerbungen, Einritzungen Strichraster, Aufdrucke und/oder Siebdrucke.

Die LED-Leiterplatte enthält bevorzugt Silber, Kupfer, Zinn, Nickel, Gold, Aluminium, Eisen, Wolfram und/oder Chrom und/oder ein elektrisch leitfähiges Klebeband.

Die Erfindung umfasst des Weiteren ein Verfahren zur Herstellung der beleuchteten Scheibenanordnung. In einem ersten Schritt werden LEDs und ein elektrisches Anschlusskabel an einer LED-Leiterplatte angebracht. Dies kann beispielsweise durch Stecken und/oder Löten erfolgen. Der daraus erhaltene LED-Verbund wird in ein Formwerkzeug eingelegt. Das Formwerkzeug gibt die späteren Abmessungen der LED-Lichtleiste vor. Das Formwerkzeug wird anschließend mit einer Rohpolymerummantelung gefüllt. Die Rohpolymerummantelung enthält bevorzugt ein hochtemperatur- oder additionsvemetzendes Silikon. Die eingefüllte Rohpolymerummantelung härtet (vulkanisiert) in Abhängigkeit vom verwendeten hochtemperatur- oder additionsvernetzendes Silikon bevorzugt bei Temperaturen von 120 °C bis 250 °C zur Polymerummantelung aus. Die daraus erhaltene LED-Lichtleiste wird über ein Verbindungsstück mit der Scheibe verbunden. Das Verbindungsstück wird bevorzugt aus einem flüssigen, aushärtbaren Silikon gefertigt und verbindet nach dem Aushärten die Scheibe und die LED-Lichtleiste.

In einem alternativen Verfahren zur Herstellung der erfindungsgemäßen beleuchteten Scheibenanordnung werden in einem ersten Schritt LEDs und ein elektrisches Anschlusskabel an einer LED-Leiterplatte angebracht. Dies kann beispielsweise durch Stecken, Kleben und/oder Löten erfolgen. Der daraus erhaltene LED-Verbund wird in eine Polymerummantelung eingelegt. Die Polymerummantelung enthält bevorzugt einen peroxidisch oder additionsvernetzenden Silikonkautschuk. Die Polymerummantelung ist derart gestaltet, dass es den LED-Verbund in einer Nut aufnimmt und nach hinten hin offen ist. Durch die Öffnung wird der LED-Verbund eingesetzt. An den seitlichen Flanken der Polymerummantelung können bevorzugt Profilnuten angebracht werden. Die Profilnuten ennöglichen das Anbringen eines zusätzlichen Reflektors aus Metall oder Silikon. Auf der Austrittsseite des Lichts der LEDs weist die Polymerummantelung bevorzugt eine hochglänzende Oberfläche auf. Die Polymerummantelung wird anschließend versiegelt. Die Versiegelung erfolgt bevorzugt mit einem optisch transparenten Polymer, beispielsweise einem RTV-Silikonkautschuk. Die daraus erhaltene LED-Lichtleiste wird über ein Verbindungsstück mit der Scheibe verbunden.

Das Verbindungsstück wird bevorzugt aus einem flüssigen, aushärtbaren Silikon gefertigt und befestigt nach dem Aushärten die LED-Lichtleiste an der Scheibe.

Das elektrische Anschlusskabel der LED-Lichtleiste ist bevorzugt vollständig mit einer Polymerummantelung versehen, die eine komplette Versiegelung der Polymerummantelung der LED-Lichtleisteleiste gewährleistet.

Das Verbindungsstück umfasst ein doppelseitiges, optisch transparentes Klebeband. Das Klebeband ist auf der einen Seite mit einem silikonhaltigen Klebstoff und auf der anderen Seite eine acrylathaltigen Klebstoff versehen.

Das Verbindungsstück sowie die vom Verbindungsstück kontaktierten Bereiche der Scheibe und/oder der Polymemmmantelung werden bevorzugt über eine Plasmabehandlung, Bestrahlung und/oder Coronabehandlung aktiviert. An der Oberfläche des Klebebandes entstehen polare Moleküle oder Molekülbruchstücke die eine verbesserte Haftung auf dem Klebeband ermöglichen. Neben polaren Molekülen können auch radikalische Molelkülfragmente oder Ionen auf der Oberfläche des aktivierten Klebebandes entstehen.

Die Erfindung umfasst des Weiteren die Verwendung der beleuchteten Scheibenanordnung als Gebäudeinnenbeleuchtung, Gebäudeaußenbeleuchtung, Werbeträger und/oder Fahrzeugscheibe.

Im Folgenden wird die Erfindung anhand von Zeichnungen und eines Ausführungssowie Vergleichsbeispiels näher erläutert. Die Zeichnungen sind rein schematische Darstellungen und nicht maßstabsgetreu. Sie schränken die Erfindung in keiner Weise ein.

Ein Ausführungsbeispiel der Erfindung ist in der Zeichnung dargestellt und wird im Folgenden näher beschrieben.

Es zeigen:
Figur 1 einen Querschnitt der erfindungsgemäßen beleuchteten Scheibenanordnung,
Figur 2 eine schematische Darstellung des Fließschemas einer bevorzugten Ausführungsform des erfindungsgemäßen Verfahrens zur Herstellung der beleuchteten Scheibenanordnung,
Figur 3 eine schematische Darstellung des Fließschemas einer weiteren Ausführungsform des erfindungsgemäßen Verfahrens zur Herstellung einer beleuchteten Scheibenanordnung.

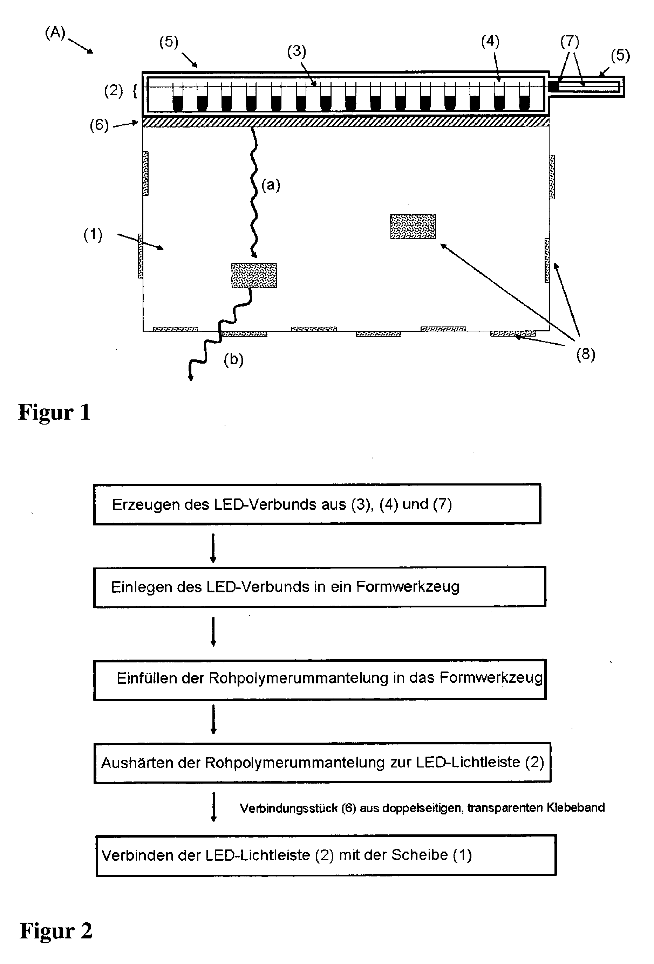

Figur 1 zeigt einen Querschnitt der erfindungsgemäßen Scheibenanordnung (A). Die LED-Lichtleiste (2) umfasst mindestens eine LED-Leiterplatte (3) und darauf angebrachte LEDs (4). Der elektrische Anschluss (7) versorgt die LED-Leiterplatte (3) mit Strom. Die LED-Lichtleiste (2) weist eine Polymerummantelung (5) auf. Die Polymerummantelung (5) aus einem optisch transparenten Polymer versiegelt die LED-Lichtleiste (2) nach außen. Die LED-Lichtleiste (2) ist über ein Verbindungsstück (6) mit dem Rand der Scheibe (1) verbunden. Das Verbindungsstück enthält ein doppelseitiges, transparentes Klebeband. Das von der LED-Lichtleiste in die Scheibe (1) eingestrahlte Licht (a) wird von an der Scheibe (1) angebrachten Reflektoren (8) aus der Scheibe (1) als reflektiertes Licht (b) abgestrahlt.

Figur 2 zeigt ein Fließschema einer bevorzugten Ausführungsform zur Herstellung der erfindungsgemäßen beleuchteten Scheibenanordnung (A). In einem ersten Schritt werden LEDs (4) und ein elektrisches Anschlusskabel (7) an einer LED-Leiterplatte (3) angebracht. Dies kann beispielsweise durch Stecken, Kleben und/oder Löten erfolgen. Der daraus erzeugte LED-Verbund wird in ein Formwerkzeug eingelegt. Die Temperaturbeständigkeit des Formwerkzeugs muss dabei über der Vernetzungstemperatur des verwendeten Silikons gewählt werden. Das verwendete Formwerkzeug ist bevorzugt derart gestaltet, dass es auf der Austrittsfläche des Lichts der eingeschlossenen LEDs eine hochglanzpolierte Fläche aufweist.

Das Formwerkzeug wird anschließend mit einer Rohpolymerummantelung gefüllt. Die Rohpolymerummantelung enthält ein optisch transparentes HTV-Silikon mit einer Shore Härte zwischen 30 Shore A und 90 Shore A. Alternativ kann auch ein optisch transparenter 2 Komponenten LSR(Liquid Silicone Rubber)-Silikonkautschuk mit einer Shore Härte zwischen 30 Shore A und 90 Shore A verwendet werden. Eine Definition der Shore Härte für Elastomere findet sich in der DIN 53505 und DIN 7868. Die eingefüllte Rohpolymerummantelung vulkanisiert (härtet) in Abhängigkeit vom verwendeten hochtemperatur- oder additionsvernetzenden Silikon, bevorzugt bei Temperaturen von 160 °C bis 200 °C und einer Zuhaltekraft von 150 kN bis 250 kN.

Die daraus erhaltene LED-Lichtleiste (2) wird mittels eines Verbindungsstücks (6) aus doppelseitigem, optisch transparentem Klebeband (6) mit einer Scheibe (1) aus Glas verbunden. Das Klebeband (6) enthält auf der der LED-Lichtleiste (2) zugewandten Seite einen silikonhaltigen Klebstoff. Das Klebeband enthält auf der der Scheibe (1) zugewandten Seite einem Klebstoff auf Acrylatbasis. Das Klebeband kann zusätzlich noch durch eine Koronaentladung behandelt und aktiviert werden. Die Dauer und Intensität der Koronaentladung richten sich dabei nach der Größe des Klebebandes und der Art des verwendeten Klebstoffes auf dem Klebeband.

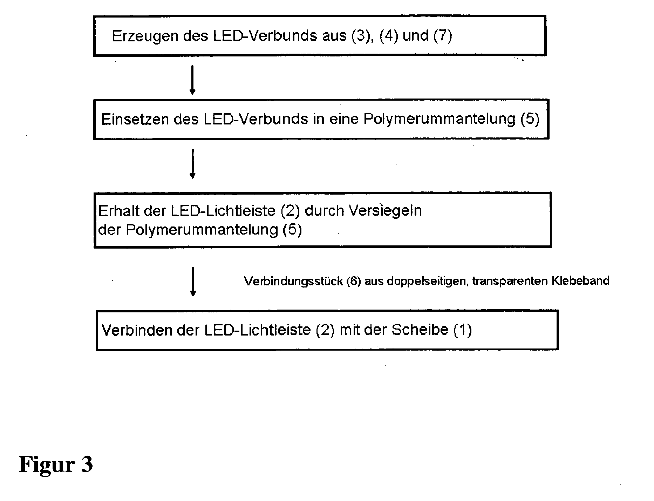

Figur 3 zeigt ein Fließschema eines weiteren Herstellungsverfahrens der erfindungsgemäßen beleuchteten Scheibenanordnung (A). In einem ersten Schritt werden LEDs (4) und ein elektrisches Anschlusskabel (7) an einer LED-Leiterplatte (3) angebracht. Dies kann beispielsweise durch Stecken und/oder Löten erfolgen. Der daraus erhaltene LED-Verbund wird in eine Polymerummantelung (5) eingelegt. Die Polymerummantelung (5) enthält einen peroxidisch oder additionsvernetzenden Silikonkautschuk. Die Polymerummantelung (5) ist nach hinten hin offen, so dass sie den LED-Verbund in einer Nut aufnehmen kann. Auf der Austrittsseite des Lichts der LEDs weist die Polymerummantelung (5) bevorzugt eine hochglänzende Oberfläche auf. Die Polymerummantelung (5) wird anschließend versiegelt. Die Versiegelung erfolgt mit einem optisch transparenten Polymer, beispielsweise einem raumtemperaturvernetzenden Silikonkautschuk. Das elektrische Anschlusskabel (7) ist mit einer Polymerummantelung versehen, die eine komplette Versiegelung des Systems gewährleistet. Die daraus erhaltene LED-Lichtleiste (2) wird über ein Verbindungsstück (6) aus doppelseitigem, optisch transparentem Klebeband (6) mit einer Scheibe (1) aus Glas verbunden. Das Klebeband (6) enthält auf der der LED-Lichtleiste (2) zugewandten Seite einen silikonhaltigen Klebstoff. Das Klebeband (6) enthält auf der der Scheibe (1) zugewandten Seite einem Klebstoff auf Acrylatbasis. Das Klebeband (6) kann zusätzlich noch durch eine Koronaentladung aktiviert werden. Die Dauer und Intensität der Koronaentladung richten sich dabei nach der Größe des Klebebandes (6) und der Art des verwendeten Klebstoffes auf dem Klebeband.

Die Bezugszeichen bedeuten dabei:
(1) Scheibe,
(2) LED-Lichtleiste,
(3) LED-Leiterplatte,
(4) LED,
(5) Polymerummantelung,
(6) Verbindungsstück,
(7) elektrisches Anschlusskabel.

In Folgenden wird die Erfindung anhand eines Beispiels des erfindungsgemäßen Verfahrens und eines Vergleichsbeispiels näher erläutert.

Die Beständigkeit und Dichtigkeit der erfindungsgemäßen beleuchteten Scheibenanordnung (A) wurde in zwei Versuchreihen getestet. Dazu wurden die LED-Lichtleisten (2) des erfindungsgemäßen Beispiels 1 und der Vergleichsbeispiele 2 und 3 einem Belastungstest unter sauren Bedingungen und erhöhter Luftfeuchtigkeit ausgesetzt. Die LED-Lichtleiste (2) (Länge von 450 mm, Breite von 18 mm und Höhe von 11,4 mm) enthielt in allen Beispielen 72 LEDs (24x Blau, 24x Rot, 24x Grün). Alle Tests wurden bei 100 % Vollast (24 V und 6 Watt) der LEDs durchgeführt. Sowohl das erfindungsgemäße Beispiel 1, als auch das Vergleichsbeispiel 2 enthielten denselben LSR-Silikonkautschuk auf Polydimethylsiloxanbasis aus Elastosil^{®} LR 3003/60 A und Eiastosil^{®} LR 3003/60 B im Gewichtsverhältnis 1:1 (Wacker Chemie AG, D-70178 Stuttgart). Das Vergleichsbeispiel 3 enthielt keine Ummantelung.

### Beispiel 1 (erfindungsgemäß)

In einer ersten Versuchsreihe gemäß DIN50018/ISO3231 wurde die LED-Lichtleiste (2) der erfindungsgemäßen beleuchteten Scheibenanordnung im eingeschalteten Zustand für 20 Tage einer SO₂ Atmosphäre ausgesetzt.

In einer zweiten Versuchreihe gemäß DIN500167 wurde die LED-Lichtleiste (2) der erfindungsgemäßen beleuchteten Scheibenanordnung im eingeschalteten Zustand für 140 Tage bei 50 °C einer Atmosphäre mit 100 % Luftfeuchtigkeit ausgesetzt.

### Beispiel 2 (Vergleichsbeispiel)

Das Vergleichsbeispiel 2 unterschied sich von der erfindungsgemäßen beleuchteten Scheibenanordnung durch die Einkapselung der LED-Lichtleiste (2) in einem starren Aluminiumgehäuse. Der Zwischenraum zwischen dem Aluminiumgehäuse und der LED-Leiterplatte (3) und LEDs (4) war mit demselben LSR-Silikonkautschuk wie im Beispiel 1 ausgefüllt. Das elektrische Anschlusskabel (7) war im Gegensatz zum erfindungsgemäßen Beispiel 1 nicht mit einer Polymerummantelung (5) versehen. Die sonstigen Abmessungen entsprachen dem erfindungsgemäßen Beispiel 1.

In einer ersten Versuchsreihe gemäß DIN50018/ISO3231 wurde die LED-Lichtleiste (2) des Vergleichsbeispiels 2 im eingeschalteten Zustand für 20 Tage einer SO₂ Atmosphäre ausgesetzt.

In einer zweiten Versuchreihe gemäß DIN500167 wurde die LED-Lichtleiste (2) des Vergleichsbeispiels 2 im eingeschalteten Zustand für 140 Tage bei 50 °C einer Atmosphäre mit 100 % Luftfeuchtigkeit ausgesetzt.

### Beispiel 3 (Vergleichsbeispiel)

Das Vergleichsbeispiel 3 unterschied sich von der erfindungsgemäßen beleuchteten Scheibenanordnung durch die fehlende Ummantelung der LED-Leiterplatte (3) und LEDs (4). Das elektrische Anschlusskabel (7) war nicht mit einer Polymerummantelung (5) versehen. Die sonstigen Abmessungen entsprachen dem erfindungsgemäßen Beispiel 1.

In einer ersten Versuchsreihe gemäß DIN50018/ISO3231 wurde die LED-Lichtleiste (2) des Vergleichsbeispiels 3 im eingeschalteten Zustand für 20 Tage einer SO₂ Atmosphäre ausgesetzt.

In einer zweiten Versuchreihe gemäß DIN500167 wurde die LED-Lichtleiste (2) des Vergleichsbeispiels 3 im eingeschalteten Zustand für 140 Tage bei 50 °C einer Atmosphäre mit 100 % Luftfeuchtigkeit ausgesetzt.

Die Ergebnisse des erfindungsgemäßen Beispiels 1 und der Vergleichsbeispiele 2 und 3 sind in Tabelle 1 zusammengefasst.

**Tabelle 1: Lebensdauer der LED-Lichtleiste (2) des erfindungsgemäßen Beispiels 1 und der Vergleichsbeispiele 2 und 3.**

| Beispiel | Lebensdauer Versuchsreihe 1 | Lebensdauer Versuchsreihe 2 |
|---|---|---|
| 1 (erfindungsgemäß) | > 20 Tage | > 140 Tage |
| 2 (Vergleichsbeispiel) | 1 Tag | > 140 Tage |
| 3 (Vergleichsbeispiel) | 1 Tag | 1 Tag |

Wie aus Tabelle 1 ersichtlich, war die Lebensdauer der erfindungsgemäßen beleuchteten Scheibenanordnung 1 deutlich höher als die der Vergleichsbeispiele 2 und 3. Damit sind die zu erwartenden Instandhaltungskosten der erfindungsgemäßen beleuchteten Scheibenanordnung deutlich niedriger als im Vergleichsbeispiel nach dem Stand der Technik. Diese Ergebnisse sind überraschend und unerwartet.

## Patentansprüche

1. Scheibeanordnung mit Beleuchtung mindestens umfassend:
a) eine Scheibe (1),
b) mittels eines Verbindungsstückes (6) am Rand der Scheibe (1) befestigte LED-Lichtleiste (2), wobei die LED-Lichtleiste (2) mindestens umfasst:
b.1) eine LED-Leiterplatte (3),
b.2) eine LED (4),
b.3) ein elektrisches Anschlusskabel (7),
b.4) eine Polymerummantelung (5) der LED-Leiterplatte (3), der LED (4) und des elektrischen Anschlusskabels (7) und
c) einen an der Scheibe (1) angebrachten Reflektor (8),
wobei das Verbindungsstück (6) ein doppelseitiges, optisch transparentes Klebeband enthält und wobei das optisch transparente Klebeband auf der der LED-Lichtleiste (2) zugewandten Seite einen silikonhaltigen Klebstoff und auf der der Scheibe (1) zugewandten Seite einem Klebstoff auf Acrylatbasis enthält.

2. Scheibenanordnung nach Anspruch 1, wobei die Polymerummantelung (5) Silikone, Polyisoprene, Styrol-Butadien-Kautschuk, Butadien-Acrylnitril-Kautschuk und/oder Polyacrylate sowie Gemische und/oder Copolymere davon enthält.

3. Scheibenanordnung nach Anspruch 2, wobei die Silikone RTV-Silikonkautschuk, HTV-Silikonkautschuk, peroxidischvernetzter-Silikonkautschuk und/oder additionsvernetzter-Silikonkautschuk sowie Gemische und/oder Copolymere davon enthalten.

4. Scheibenanordnung nach einem der Ansprüche 1 bis 3, wobei die Polymerummantelung (5) eine optische Transparenz von > 60 %, bevorzugt > 75 % aufweist, besonders bevorzugt > 85 % aufweist.

5. Scheibenanordnung nach einem der Ansprüche 1 bis 4, wobei die Polymerummantelung (5) einen extrudierten Silikonfornkörper umfasst.

6. Scheibenanordnung nach einem der Ansprüche 1 bis 5, wobei das Verbindungsstück (6) Acrylatklebstoffe, Methylmethacrylatklebstoffe, Cyanacrylatklebstoffe, Polyepoxide, Silikonklebstoffe und/oder Silanvernetzende-Polymerklebstoffe sowie Gemische und/oder Copolymere davon enthält.

7. Scheibenanordnung nach einem der Ansprüche 1 bis 6, wobei das Verbindungsstück (6) eine optische Transparenz von > 80 %, bevorzugt > 90 % aufweist.

8. Verfahren zur Herstellung einer Scheibenanordnung mit Beleuchtung nach einem der Ansprüche 1-7 mindestens umfassend:
a.) Anbringen mindestens einer LED (4) und elektrisches Anschlusskabel (7) an einer LED-Leiterplatte (3) zur Erzeugung eines LED-Verbunds,
b.) Einlegen des LED-Verbunds in ein Formwerkzeug,
c.) Einfüllen einer Rohpolymerummantelung in das Formwerkzeug,
d.) Aushärten der Rohpolymerummantelung zur Polymerummantelung (5) und zur Erzeugung einer LED-Lichtleiste (2) und
e.) Verbindung der LED-Lichtleiste (2) mittels eines Verbindungsstückes (6) mit einem Rand einer Scheibe (1) mit einem Reflektor (8).

9. Verfahren zur Herstellung einer Scheibenanordnung mit Beleuchtung nach einem der Ansprüche 1 bis 7 mindestens umfassend:
a.) Anbringen mindestens einer LED (4) und elektrisches Anschlusskabel (7) an einer LED-Leiterplatte (3) zur Erzeugung eines LED-Verbunds,
b.) Einsetzen des LED-Verbunds in eine Polymerummantelung (5),
c.) Versiegeln der Polymerummantelung (5) zur Erzeugung einer LED-Lichtleiste (2),
d.) Verbindung der LED-Lichtleiste (2) mittels eines Verbindungsstückes (6) mit einem Rand einer Scheibe (1) mit einem Reflektor (8).

10. Verfahren nach einem der Ansprüche 8 oder 9, wobei das Verbindungsstück (6), die Scheibe (1) und/oder die Polymerummantelung (5) über eine Plasmabehandlung, Bestrahlung und/oder Coronabehandlung aktiviert werden.

11. Verwendung der Scheibenanordnung nach einem der Ansprüche 1 bis 7 als Gebäudeinnenbeleuchtung, Gebäudeaußenbeleuchtung, Werbeträger und/oder Fahrzeugscheibe.

## Claims

1. Pane assembly with illumination, comprising at least:
a) a pane (1),
b) an LED light strip (2) attached on the edge of the pane (1) by a connecting piece (6), wherein the LED light strip (2) comprises at least:
b.1) an LED circuit board (3),
b.2) an LED (4),
b.3) an electrical connection cable (7),
b.4) a polymeric sheath (5) of the LED circuit board (3), of the LED (4), and of the electrical connection cable (7), and
c) a reflector (8) mounted on the pane (1),
wherein the connecting piece (6) includes a double-sided, optically transparent adhesive tape and wherein the optically transparent adhesive tape includes, on the side facing the LED light strip (2), a silicone-containing adhesive and, on the side facing the pane (1), an acrylate-based adhesive.

2. Pane assembly according to claim 1, wherein the polymeric sheath (5) contains silicones, polyisoprenes, styrene-butadiene rubber, butadiene acrylonitrile rubber, and/or polyacrylates as well as mixtures and/or copolymers thereof.

3. Pane assembly according to claim 2, wherein the silicones include RTV silicone rubber, HTV silicone rubber, peroxide vulcanizing silicone rubber, and/or addition vulcanizing silicone rubber as well as mixtures and/or copolymers thereof.

4. Pane assembly according to one of claims 1 through 3, wherein the polymeric sheath (5) has an optical transparency of > 60%, preferably > 75%, particularly preferably > 85%.

5. Pane assembly according to one of claims 1 through 4, wherein the polymeric sheath (5) comprises an extruded silicone molded body.

6. Pane assembly according to one of claims 1 through 5, wherein the connecting piece (6) contains acrylate adhesives, methyl methacrylate adhesives, cyanoacrylate adhesives, polyepoxies, silicone adhesives, and/or silane-cross-linked polymeric adhesives, as well as mixtures and/or copolymers thereof.

7. Pane assembly according to one of claims 1 through 6, wherein the connecting piece (6) has an optical transparency of > 80%, preferably > 90%.

8. Method for producing a pane assembly with illumination according to one of claims 1 through 7, comprising at least:
a.) Mounting at least one LED (4) and electrical connection cable (7) on an LED circuit board (3) to create an LED array,
b.) Insertion of the LED array into a mold,
c.) Filling a raw polymeric sheath into the mold,
d.) Curing the raw polymeric sheath to form the polymeric sheath (5) and to create an LED light strip (2), and
e.) Connecting the LED light strip (2) to one edge of a pane (1) with a reflector (8) by means of a connecting piece (6).

9. Method for producing a pane assembly with illumination according to one of claims 1 through 7, comprising at least:
a.) Mounting at least one LED (4) and electrical connection cable (7) on an LED circuit board (3) to create an LED array,
b.) Insertion of the LED array into a polymeric sheath (5),
c.) Sealing the polymeric sheath (5) to create an LED light strip (2),
d.) Connecting the LED light strip (2) to one edge of a pane (1) with a reflector (8) by means of a connecting piece (6).

10. Method according to one of claims 8 or 9, wherein the connecting piece (6), the pane (1), and/or the polymeric sheath (5) are activated by plasma treatment, irradiation, and/or corona treatment.

11. Use of the pane assembly according to one of claims 1 through 7 as building interior illumination, building exterior illumination, advertising media, and/or a motor vehicle pane.

## Revendications

1. Dispositif de vitre comportant un éclairage comprenant au moins :
a) une vitre (1) ;
b) une bande lumineuse à DEL (2) fixée au moyen d'une pièce de liaison (6) sur le bord de la vitre (1), la bande lumineuse à DEL (2) comprenant au moins :
b.1) un circuit imprimé à DEL (3) ;
b.2) une DEL (4) ;
b.3) un câble de raccordement électrique (7) ;
b.4) un enrobage de polymère (5) du circuit imprimé à DEL (3), de la DEL (4) et du câble de raccordement électrique (7) ; et
c) un réflecteur (8) fixé sur la vitre (1) ;
la pièce de liaison (6) contenant une bande adhésive optiquement transparente double face, et la bande adhésive optiquement transparente contenant, sur le côté tourné vers la bande lumineuse à DEL (2), un adhésif à teneur en silicone et, sur le côté tourné vers la vitre (2), un adhésif à base d'acrylate.

2. Dispositif de vitre selon la revendication 1, dans lequel le revêtement polymère (5) contient des silicones, des polyisoprènes, du caoutchouc styrènebutadiène, du caoutchouc butadiène-acrylonitrile et/ou des polyacrylates ainsi que des mélanges et/ou copolymères de ceux-ci.

3. Dispositif de vitre selon la revendication 2, dans lequel les silicones contiennent du caoutchouc de silicone RTV, du caoutchouc de silicone HTV, du caoutchouc de silicone réticulé par peroxyde et/ou du caoutchouc de silicone réticulé par addition ainsi que des mélanges et/ou copolymères de ceux-ci.

4. Dispositif de vitre selon l'une des revendications 1 à 3, dans lequel l'enrobage de polymère (5) présente une transparence optique de > 60 %, de préférence > 75 %, de manière particulièrement préférée > 85 %.

5. Dispositif de vitre selon l'une des revendications 1 à 4, dans lequel l'enrobage de polymère (5) comprend un corps moulé de silicone extrudé.

6. Dispositif de vitre selon l'une des revendications 1 à 5, dans lequel la pièce de liaison (6) contient des adhésifs à base d'acrylate, des adhésifs à base de méthacrylate de méthyle, des adhésifs à base de cyanoacrylate, des polyépoxydes, des adhésifs à base de silicone et/ou des adhésifs à base de polymère réticulé par silane, ainsi que des mélanges et/ou copolymères de ceux-ci.

7. Dispositif de vitre selon l'une des revendications 1 à 6, dans lequel la pièce de liaison (6) présente une transparence optique de > 80 %, de préférence > 90 %.

8. Procédé de fabrication d'un dispositif de vitre comportant un éclairage selon l'une des revendications 1 à 7, comprenant au moins :
a.) appliquer au moins une DEL (4) et un câble de raccordement électrique (7) sur un circuit imprimé à DEL (3) pour produire un assemblage à DEL ;
b.) introduire l'assemblage à DEL dans un outil de moulage ;
c.) verser un enrobage de polymère brut dans l'outil de moulage ;
d.) faire durcir l'enrobage de polymère brut en l'enrobage de polymère (5) et produire une bande lumineuse à DEL (2) ; et
e.) relier la bande lumineuse à DEL (2) au moyen d'une pièce de liaison (6) avec un bord d'une vitre (1) comportant un réflecteur (8).

9. Procédé de fabrication d'un dispositif de vitre comportant un éclairage selon l'une des revendications 1 à 7, comprenant au moins :
a.) appliquer au moins une DEL (4) et un câble de raccordement électrique (7) sur un circuit imprimé à DEL (3) pour produire un assemblage à DEL ;
b.) introduire l'assemblage à DEL dans un enrobage de polymère (5) ;
c.) sceller l'enrobage de polymère (5) pour produire une bande lumineuse à DEL (2) ;
d.) relier la bande lumineuse à DEL (2) au moyen d'une pièce de liaison (6) avec un bord d'une vitre (2) comportant un réflecteur (8).

10. Procédé selon l'une des revendications 8 ou 9, dans lequel la pièce de liaison (6), la vitre (1) et/ou l'enrobage de polymère (5) sont activés par un traitement par plasma, un rayonnement et/ou un traitement Corona.

11. Utilisation du dispositif de vitre selon l'une des revendications 1 à 7 en tant qu'éclairage interne de bâtiments, éclairage externe de bâtiments, support publicitaire et/ou vitre de véhicule.
